# NEUE EUROPÄISCHE PATENTSCHRIFT

(11) **EP 2 424 724 B2**
(45) Veröffentlichungstag und Bekanntmachung des Hinweises auf die Entscheidung über den Einspruch: **18.12.2024**
(45) Hinweis auf die Patenterteilung: 28.08.2019
(21) Anmeldenummer: 10719927.5
(22) Anmeldetag: 26.04.2010
(51) Int. Cl.: B29C 65/08, B65B 51/22, B65B 51/26

(54) **ULTRASCHALLSIEGELVORRICHTUNG UND VERFAHREN ZUM VERSIEGELN VON MATERIALBAHNEN**
ULTRASOUND WELDING DEVICE AND METHOD FOR WELDING MATERIAL WEBS
SCELLEUSE À ULTRASONS ET PROCÉDÉ DE SCELLAGE DE BANDES DE MATÉRIAU

(30) Priorität: 27.04.2009 DE 102009002675
(43) Veröffentlichungstag der Anmeldung: 07.03.2012
(73) Patentinhaber: Herrmann Ultraschalltechnik GmbH & Co. KG, 76307 Karlsbad (DE)
(72) Erfinder: WEILER, Klaus, 76228 Karlsruhe (DE)
(74) Vertreter: WSL Patentanwälte Partnerschaft mbB
(86) Internationale Anmeldenummer: PCT/EP2010/055563
(87) Internationale Veröffentlichungsnummer: WO 2010/125030

(56) Entgegenhaltungen:
- EP-A1- 1 216 781
- EP-A1- 1 932 651
- WO-A1-2008/059352
- WO-A1-2008/059352
- DE-A1- 10 126 943
- DE-A1- 10 331 064
- DE-A1- 102006 020 429
- DE-A1- 102006 020 429
- DE-A1- 102006 047 378
- DE-C1- 19 753 740
- US-A- 3 405 024
- US-A- 3 852 144
- US-A- 5 519 983

## Beschreibung

Diese Erfindung betrifft ein Verfahren zur Ultraschallversiegelung gemäß Oberbegriff von Anspruch 1. Im allgemeinen ist der Amboss relativ zur Sonotrode bewegbar, so dass die Materialbahnen, wie z. B. Folienbahnen, leicht zwischen die Sonotrode und den Amboss gebracht werden können, die dann zum Verschweißen die Ultraschallschwingungen überlagert von einer Schweißkraft auf die Materialbahnen aufbringen. Grundsätzlich ist das Ultraschallsiegeln, bei dem 2 oder mehr Materialbahnen miteinander verschweißt werden, vom Ultraschallschneiden, bei dem die Materialbahnen mittels Ultraschall durchtrennt werden, zu unterscheiden.

Beispielsweise werden die genannten Ultraschallsiegelvorrichtungen bei Schlauchbeutelverpackungsmaschinen zur Versiegelung der Kopf- und/oder Längsnähte eingesetzt.

Die Dicke der jeweiligen Materialbahnen liegt häufig deutlich unter 0,1 mm. Änderungen der Prozessparameter oder Abweichungen der Materialeigenschaften oder der Schweißgeschwindigkeit haben daher einen starken Einfluss auf das Siegelergebnis. Die Beherrschung dieser Parameter zur Sicherstellung eines konstant guten Siegelergebnisses ist umso wichtiger, je dünner die Folien sind.

Bei dünnen Folien findet der Siegelprozess in einem räumlich und funktional sehr begrenzten Bereich statt, wodurch schon geringere Änderungen der Prozesstemperatur, der Schweißkraft oder der Zustellung der Werkzeuge (Amboss und Sonotrode) zueinander das Siegelergebnis erheblich verändern kann.

Nach dem Stand der Technik sind verschiedene Vorrichtungen und Vorgehensweisen bekannt, um die relevanten Prozessparameter und damit den Siegelprozess zu beherrschen (siehe beispielsweise DE102006020429).

Eine Möglichkeit ist es, die Größe des Schweißspaltes konstant zu halten. Die Größe des Schweißspaltes wird insbesondere durch die thermische Ausdehnung der am Prozess beteiligten Bauteile beeinflusst. Die Wärme entsteht durch Verlustleistungen im Ultraschallerzeuger, Dämpfungsverlusten in den schwingenden Teilen und durch die Reibung im Prozess selbst. Zur Konstanthaltung des Schweißspaltes sind zwei verschiedene Verfahren gebräuchlich. Ein erstes ist die Konstantregelung der Leistungsabgabe des Generators. Dadurch wird der Wärmeeintrag in das System ebenfalls konstant, wodurch sich nach einer Einregelzeit konstante Prozessverhältnisse einstellen. Eine weitere Möglichkeit ist, den Abstand des Ambosses zur Sonotrode direkt zu erfassen und konstant zu regeln.

Zur Einstellung des Schweißspaltes kommt dabei unter anderem ein Piezostellglied zum Einsatz. Eine weitere Möglichkeit, konstante Prozessbedingungen zu erreichen, stellt das Konstanthalten der Schweißkraft dar. Eine Möglichkeit der Realisierung ist es, die Siegelkraft zu erfassen und die Kraft über entsprechende Stellglieder konstant zu regeln.

Diesen Lösungen ist gemeinsam, dass sie Regelungen verwenden, die teure Messtechnik, aufwendige und genaue Stellglieder und eine aufwendig zu konzipierende Regelung einschließlich Regelelektronik erfordern. Die auf diese Weise realisierten Regelkreise ermöglichen zwar die Prozessbeherrschung, beeinflussen jedoch die Bedienbarkeit, Verfügbarkeit und Komplexität der Ultraschallsiegelvorrichtungen negativ.

Bei Schlauchbeutelverpackungsmaschinen werden häufig aneinander gesplicte Folien eingesetzt. Um die Folienbahnlänge zu verlängern, werden mehrere Folien aneinander befestigt. Dazu werden benachbarte Folienbahnen leicht überlappend aneinander gelegt und die Überlappstelle mit einem Klebestreifen versehen, so dass die beiden Folienbahnen zusammengehalten werden. Diese Splice-Verbindung kann innerhalb einer Folienrolle auftreten, da der Folienhersteller bereits mehrere Bahnen aneinandergefügt hat, oder kann manuell beim Rollenwechsel erzeugt werden. Durchläuft eine solche Splice-Verbindung den Spalt zwischen Sonotrode und Amboss, so erhöht sich die Materialbahndicke kurzzeitig abrupt auf mehr als das Doppelte. Solch abrupten Sprünge in der Materialbahndicke lassen sich mit den bekannten Ausführungsformen nur schwer handhaben.

Bei der Ultraschallsiegelvorrichtung kann der Amboss der Materialbahn ausweichen, wenn der durch die Sonotrode auf die Materialbahn aufgebrachte Druck zu groß wird. Dehnt sich die Sonotrode beispielsweise während des Siegelvorgangs aus, so erhöht dies die Kraft, die die Sonotrodensiegelfläche auf die Materialbahn ausübt. Wird die Kraft so groß, dass kein zufriedenstellendes Schweißergebnis mehr zu erzielen ist, kann die Materialbahn durch die Beweglichkeit des Ambosses der Sonotrode ausweichen. Die Siegelkraft wird dabei durch den Gegenkrafterzeuger bestimmt.

Beispielsweise kann der Gegenkrafterzeuger ein Federelement sein, welches den Amboss in Richtung der Referenzposition drückt. Alternativ dazu kann der Gegenkrafterzeuger auch einen Pneumatik- oder Hydraulikzylinder aufweisen.

Besonders vorteilhaft ist es, wenn sich die Gegenkraft des Gegenkrafterzeugers einstellen lässt. Dadurch kann die Siegelkraft auf alle zu verarbeitenden Materialbahnen eingestellt werden.

Diese Einstellbarkeit der Gegenkraft ermöglicht, die Schweißkraft einzustellen. Bei Federelementen kann die Gegenkraft dadurch eingestellt werden, dass die Vorspannung der Federelemente verändert wird. Dies ist möglich, indem durch Verstellen der Aufstandspunkte des Federelements dessen Länge verändert wird und damit die Vorspannung eingestellt wird. Diese Verstellung kann beispielsweise durch eine Stellschraube oder einen manuell betätigbaren oder automatisch, z. B. elektromotorisch, angetriebenen Stellantrieb realisiert werden. Da der Gegenkrafterzeuger auch ein Pneumatik- oder Hydraulikzylinder sein kann, kann die Schweißkraft in diesen Fällen durch Verändern eines im Betrieb konstanten Drucks in den Zylindern eingestellt werden.

Um ein möglichst gutes Siegelergebnis zu erhalten, ist es nicht nur notwendig, die Siegelkraft zu begrenzen, sondern es muss ebenso sichergestellt werden, dass die Siegelkraft einen bestimmten minimalen Wert nicht unterschreitet. Dies kann beispielsweise durch entsprechende Einstellung der Gegenkraft erfolgen. Andererseits muss insbesondere bei der Verarbeitung von sehr dünnen Folien sichergestellt werden, dass sich Ambosssiegelfläche und Sonotrodensiegelfläche nicht zu sehr annähern um ein Durchtrennen der Materialbahn zu verhindern.

Daher ist bei der Ultraschallsiegelvorrichtung ein Anschlagelement vorgesehen, welches derart angeordnet ist, dass es die Bewegung des Amboss in Richtung der Sonotrode begrenzt, so dass die Ambosssiegelfläche einen durch das Anschlagelement festgelegten Mindestabstand zur Sonotrodensiegelfläche einhält, wobei besonders bevorzugt der Mindestabstand einstellbar ist. Das Anschlagelement verhindert somit, dass sich die Ambosssiegelfläche weiter in Richtung der Sonotrodensiegelfläche bewegt, selbst wenn die Kraft des Gegenkrafterzeugers weiter erhöht wird. Dies hat auch den Vorteil, dass der Siegeldruck, der mit dem Gegenkrafterzeuger bereitgestellt werden kann, deutlich erhöht werden kann, ohne dass im Betrieb die Gefahr der Durchtrennung der Materialbahn besteht. Zudem lässt sich bei dieser Konfiguration leichter die von dem Gegenkrafterzeuger bereitgestellte Gegenkraft im wesentlichen konstant halten.

So kann beispielsweise der Gegenkrafterzeuger derart eingestellt sein, dass der Amboss eine Kraft auf das Anschlagelement ausübt, wenn der Amboss den Mindestabstand zu der Sonotrode hat, d.h. wenn der Amboss am Anschlagelement an liegt. Wenn der Gegenkrafterzeuger ein oder mehrere Federelemente umfasst, so hängt die Schweißkraft in einem bestimmten Maße auch von der Materialbahnstärke bzw. auch von der Dämpfung und der Elastizität des zu verschweißenden Materialsab.

Ein Federgelenk als Führung kann durch seine Federwirkung ebenfalls einen Teil des Gegenkrafterzeugers darstellen. Um eine geeignete Einstellbarkeit der Schweißkraft zu erreichen, müssen die Federraten des Federgelenkes und eines Federelements als einstellbarer Gegenkrafterzeuger aufeinander abgestimmt werden. Dies gilt entsprechend für Hydraulik- oder Pneumatikzylinder. Durch die Verwendung einer langen Feder, die um eine Vorspannstrecke zusammengedrückt wird, und in diesem Zustand an einem Anschlag anliegt, kann eine ebenso hohe Schweißkraft erreicht werden, wie durch die Verwendung einer kürzeren Feder mit einer höheren Federrate, die nur um eine geringere Vorspannstrecke vorgespannt ist. Der Vorteil der längeren Feder ist, dass Schwankungen der Materialbahndicke und damit Änderungen der Vorspannung zu geringeren Kraftänderungen führen, was letztlich in einem gleichmäßigeren Schweißprozess resultiert. Die Vorspannstrecke beträgt folglich vorteilhaft mindestens das Doppelte der zulässigen Maximalauslenkung des Ambosses. Wird ein Pneumatik-oder Hydraulikzylinder mit einem konstanten Druck beaufschlagt und stellt dies den Hauptanteil der Gegenkraft dar, so ist die Schweißkraft von der Dicke der Materialbahnstärkeweitgehend unabhängig. Die Federrate der Feder und die Masse des beweglichen Aufbaus beeinflusst außerdem die Resonanzfrequenz des Ambosses. Je härter die Feder ist, desto höher ist die Resonanzfrequenz. Die Resonanzfrequenz liegt vorteilhaft deutlich unter der Schwingfrequenz der Sonotrode.

Die Einstellbarkeit des Anschlagelementes kann beispielsweise erreicht werden, indem ein Teil des Anschlagelementes durch eine Schraube, z. B. eine Stiftschraube, gebildet wird. Weiterhin ist es von Vorteil, wenn die Schraube als Messschraube am besten mit Feingewinde ausgebildet ist, so dass die gewünschte Einstellung leicht wieder aufgefunden werden kann. Diese kann sowohl auf der Seite der Sonotrode, als auch auf der Seite des Ambosses angeordnet sein. Das Gegenstück des Anschlagelementes ist vorzugsweise aus einem verschleißfesten Material hergestellt, beispielsweise aus Hartmetall, gehärtetem Stahl oder einem anderen Werkstoff mit hoher Festigkeit. Wichtig ist hierbei, dass der einstellbare Anschlag auf dem feststehenden oder beweglich (gefederten) Teil platziert wird.

In einer weiteren Ausführungsform sind sowohl Sonotrode als auch Amboss an einer Basiskonsole befestigt, wobei der Amboss über eine Linearführung zur Sonotrode hin oder von dieser wegbewegt werden kann. Dadurch kann ein flexibel einsetzbares Ultraschallsiegelmodul bereitgestellt werden, welches in den unterschiedlichsten Maschinen eingesetzt werden kann. Dadurch, dass der Amboss relativ zur Sonotrode bewegt werden kann, wird die Zugänglichkeit des Moduls bei Einstell- oder Wartungsarbeiten gewährleistet und die Folienbahn kann leicht zwischen Sonotrode und Amboss eingeführt werden. Zudem kann die Linearführung verwendet werden, um den Arbeitspunkt (Spaltgröße) grob einzustellen. Die exakte Einstellung des Arbeitspunktes erfolgt dann über den Gegenkrafterzeuger.

Ebenso kann diese separate Linearführung alleine oder in Kombination mit dem Gegenkrafterzeuger verwendet werden um definierte Mehrlagigkeiten der Materialbahn zu kompensieren. Vorteilhaft ist hierbei, dass die Mehrlagigkeit durch das komplette Siegelmodul kompensiert wird und die nicht verschweißten Fehlstellen auf ein Minimum reduziert werden.

Beispielsweise kann der Amboss einen Ambossunterbau und einen über ein Gelenk mit diesem verbundenen Arbeitsabschnitt, auf dem die Ambosssiegelfläche angeordnet ist, aufweisen, wobei das Gelenk vorzugsweise ein Festkörpergelenk ist.

Vorteil einer solchen Ultraschallsiegelvorrichtung ist, dass der Amboss aufgrund seines einfachen Aufbaus und seiner Lagerung mit einem Federgelenk eine sehr geringe Masse haben kann. Dadurch kann die Resonanzfrequenz trotz geringer Federsteifigkeiten erhöht werden, was ein schnelles Reagieren auf Änderungen der Materialdicke und der Eigenschaften der zu verschweißenden Bahnen ermöglicht. Selbstverständlich sollte die Resonanzfrequenz deutlich unter der Schwingungsfrequenz der Sonotrode liegen. Zudem ist durch ein Federgelenk eine spielfreie Führung realisiert, die eine sehr gleichmäßige Naht ermöglicht. Außerdem wird dadurch die Konstanthaltung der Prozessparameter unterstützt. Ein weiterer Vorteil eines Federgelenkes ist, dass es reibungsfrei arbeitet und dadurch keine Hystereseeffekte oder Stick-Slip-Effekte auftreten. In einer weiteren Ausführungsform ist das Federgelenk als Festkörpergelenk ausgeführt.

Dadurch kann der Amboss aus einem Stück durch Drahterosion hergestellt werden, was den Fertigungsaufwand im Vergleich zu anderen Lösungen drastisch verringert. Zudem haben Festkörpergelenke bessere Eigenschaften als Federgelenke, die aus mehreren Stücken, z. B. mit einem Stück Federblech als Federelement hergestellt werden. Dies ist vor allem durch die Homogenität des Materials und Reibung in den Verbindungsstellen begründet. Durch die dauernde Federbewegung können sich verschraubte Teile zueinander bewegen und erfordern zusätzliche Sicherungsmaßnahmen, um eine dauerhafte Führungsgenauigkeit zu gewährleisten.

Der bewegliche Ambossaufbau ist auf einer Lineareinheit angeordnet, welche vorzugsweise sehr genau geführt ist. Wichtig ist hierbei eine lange, möglichst genaue Führungseinheit, welche sehr wenig Reibungsverluste und somit wenig undefinierte Kraftzustände zulässt. Diese Führungseinheit kann ebenso mit einem Gegenkrafterzeuger ausgerüstet sein. Des weiteren kann die jeweilige Schweißkraft über einen zusätzlich adaptierbaren Kraftaufnehmer ermittelt werden. Dieser wird in Reihe, also im direkten Kraftfluss zur eingeleiteten Schweißkraft implementiert.

Erfindungsgemäß wird ein Verfahren zur Ultraschallversiegelung gemäß Anspruch 1 vorgeschlagen.

Dabei wird erfindungsgemäß das Anschlagselement derart eingestellt, dass der Mindestabstand zwischen Ambosssiegelfläche und Sonotrodensiegelfläche kleiner als die Dicke der zu siegelnden Folien, nämlich zwischen 0,25 und 0,75 der Dicke der zu siegelnden Folien und vorzugsweise zwischen 0,4 und 0,6 der Dicke der zu siegelnden Folien ist. Dabei wird unter der Dicke der zu versiegelnden Folie die Gesamtdicke der zu versiegelnden Materialbahnen verstanden. Wird beispielsweise eine Folie mit einer Dicke von 0,3 mm zweilagig gesiegelt beträgt die Dicke der zu siegelnden Folien 0,6 mm.

Weiterhin ist in einer bevorzugten Ausführungsform vorgesehen, dass der Gegenkrafterzeuger derart eingestellt wird, dass der Amboss eine voreingestellte Siegelkraft auf das Anschlagelement aufbringt.

Um die Veränderung des Siegelspaltes aufgrund der Erwärmung der Sonotrode zu minimieren kann vorgesehen sein, dass während einer ersten Siegelperiode eine größere Ultraschallleistung für das Siegeln verwendet wird als in einer zweiten Siegelperiode, die nach der ersten Siegelperiode liegt.

Durch diese Maßnahme wird während der ersten Siegelperiode mehr Energie in das System eingebracht. Während dieser Siegelperiode kommt es daher zu einer schnellen Erwärmung des Werkzeuges. Die erste Siegelperiode ist so bemessen, dass die Werkzeugtemperatur auf die gewünschte Arbeitstemperatur erhöht wird.

Die Temperatur der Siegelwerkzeuge beeinflusst die Ultraschallsiegelung. Durch den Kontakt zwischen Sonotrode und/oder Gegenwerkzeug mit der zu bearbeitenden Materialbahn wird Wärmeenergie in diese übertragen. Je wärmer Sonotrode und/oder Gegenwerkzeug sind, umso weniger Ultraschallenergie ist für den Schweißvorgang notwendig.

Weiterhin kann die Temperatur der Sonotrodensiegelfläche erfasst werden und vorzugsweise die Ultraschallleistung in Abhängigkeit von der Temperatur der Sonotrodensiegelfläche gewählt werden.

Alternativ oder in Kombination zur Einstellung der Ultraschallleistung kann die Temperatur der Sonotrode auf eine Arbeitstemperatur geregelt werden.

Beispielsweise kann die Sonotrode und/oder der Amboss vordem Siegelvorgang aufgewärmt werden. Durch die Aufwärmung zu Beginn der Produktion wird vermieden, dass die ersten Schweißnähte fehlerhaft sind, weil die richtige Prozesstemperatur noch nicht erreicht ist. Diese Vorwärmtemperatur entspricht vorteilhaft der Temperatur, die während des Schweißprozesses optimal ist.

In einer weiteren Ausführungsform wird die Temperatur der Sonotrode und/oder optional vorhandene Zwischenteile zwischen Sonotrode und Ultraschallerzeugungseinheit und/oder des Ambosses durch Änderungen der Prozessparameter des Ultraschallschwingers wie z. B. Amplitude und/oder Kraft oder durch die Temperatur von Temperierungsmedien im Wesentlichen konstant gehalten, wodurch Auswirkungen von Variationen der Schweißgeschwindigkeit, der Umgebungstemperatur, von Materialungleichmäßigkeiten oder von anderen Parametern, die die Temperatur beeinflussen, verringert werden.

Durch die genannten Maßnahmen kann die Temperatur an der Schweißstelle beeinflusst werden. Durch Rückkopplung geeigneter Prozessparameter, wie z. B. einem Temperatursignal von der Schweißstelle, der Leistungsabgabe der Ultraschallerzeugungseinheit oder der Schweißgeschwindigkeit können die genannten Effekte als Stellglieder in einem Regelkreis eingebunden werden. Auf diese Weise kann die Temperatur über einen einfachen oder auch komplexen Regelkreis konstant gehalten werden, wodurch Variationen von Schweißgeschwindigkeit, Umgebungstemperatur, Materialungleichmäßigkeiten oder anderen Parametern, die die Temperatur beeinflussen, ausgeregelt werden.

In einer weiteren Ausführungsform ist das Anschlagselement am Arbeitselement befestigt und weist im Wesentlichen den gleichen Abstand von dem Federgelenk wie die Ambosssiegelfläche auf.

Dadurch ist der Hebelarm für das Anschlagselement und für die Ambosssiegelfläche gleich, so dass eine Verstellstrecke die gleiche Änderung in der Größe des Prozessspaltes bewirkt. So kann beispielsweise eine Mikrometerschraube das Anschlagselement darstellen und deren Skala als Maß für die Spalteinstellung genutzt werden. Die Handhabung des Anschlagselements wird dadurch vereinfacht.

In einer weiteren Ausführungsform ist die Gegenkraft durch den Gegenkrafterzeuger messbar.

Da diese Vorspannung im Wesentlichen der Schweißkraft entspricht, kann durch eine solche Messung die Schweißkraft ermittelt werden. Dies kann zur Prozessüberwachung nützlich sein, z. B. kann die Schweißkraft auf einen Sollwert geregelt werden. Die Messung kann beispielsweise durch eine Kraftmessdose erfolgen, über die der Kraftfluss zum Amboss geleitet wird. Bei einem hydraulischen oder pneumatischen Gegenkrafterzeuger kann alternativ der Druck gemessen werden, der die Gegenkraft erzeugt.

In einer weiteren Ausführungsform dient die gemessene Gegenkraft als Referenzparameter für unterschiedliche Folienstrukturen beim Einrichten des Systems.

Zum Verschweißen von verschiedenen Materialbahnen kann eine unterschiedliche Schweißkraft erforderlich sein. Um diese schnell einstellen zu können, ist es zweckmäßig, entsprechende Einstellwerte vorzuhalten. Diese können zuvor durch die Messung der Vorspannung erhalten worden sein.

In einer weiteren Ausführungsform ist die Bewegungsmöglichkeit des Ambosses und damit auch des Federgelenks quer zu seiner Hauptfederrichtung durch einen oder mehrere Seitenanschläge begrenzt.

Auf diese Weise wird das Federgelenk vor Kräften geschützt, die es möglicherweise quer zur seiner Hauptfederrichtung zerstören könnten.

In einer weiteren Ausführungsform ist der Ambossunterbau gegenüber dem Element, an dem er befestigt ist, mit einer Linearführung beweglich gelagert.

In einer weiteren Ausführungsform wird der Amboss von Temperierflüssigkeit durchflossen, um diesen zu temperieren.

Dies kann dazu dienen, die Temperatur während des Schweißprozesses konstant zu halten, oder um den Amboss vor Aufnahme der Produktion vorzuwärmen.

In einer weiteren Ausführung ist ein Temperiersystem in unmittelbarer Nähe der Schweißstelle des Ambosses und/oder einer Sonotrode angeordnet.

Das Temperiersystem kann beispielsweise eine elektrische Heizung sein. Diese kann dazu dienen, die Prozesstemperatur konstant zu halten oder Sonotrode und/oder Amboss vor Aufnahme einer Produktion vorzuwärmen.

In einer weiteren Ausführung wird die Temperatur der Schweißstelle des Ambosses und/oder die Temperatur der Sonotrodensiegelfläche erfasst.

Diese Temperaturen stellen ein Maß für die Schweißtemperatur dar. Die Temperaturen können beispielsweise durch einen Regelkreis konstant gehalten werden.

In einer weiteren Ausführungsform wird der Amboss und/oder die Sonotrode zur Temperierung mit Luft mit konstanter Temperatur angeblasen.

Dies kann dazu dienen, die Prozesstemperatur konstant zu halten und/oder Amboss und Sonotrode vor der Aufnahme einer Produktion vorzuwärmen.

In einer weiteren Ausführungsform wird die Temperatur der Luft geregelt, so dass thermische Veränderungen an der Schweißstelle ausgeregelt werden.

In einer weiteren Ausführungsform ist die Sonotrode im Wesentlichen aus Titan, Aluminium oder Stahl gefertigt.

Mit einer solchen Sonotrode kann Wärme, die beim Schweißprozess entsteht, schnell aus der Schweißstelle abgeführt werden. Die dient einer schnelleren Reaktion des Systems auf thermische Veränderungen an der Schweißstelle.

In einer weiteren besonders bevorzugten Ausführungsform erfolgt die Befestigung der Ultraschallschwingeinheit direkt an der Sonotrode. Dadurch reduziert sich die durch Längenänderungen der Sonotrode aufgrund von Temperaturschwankungen hervorgerufene Veränderung der Spaltbreite.

Weitere Vorteile, Merkmale und Anwendungsmöglichkeiten der Erfindung ergeben sich sowohl aus der folgenden Beschreibung bevorzugter Ausführungsformen der Ultraschallsiegelvorrichtung, die erfindungsgemäß verwendet wird, als auch aus den dazugehörigen Figuren. Es zeigen:
Figur 1 eine perspektivische Ansicht des Ambosses und des Ambossunterbaus,
Figur 2 eine weitere perspektivische Ansicht des Ambosses und des Ambossunterbaus,
Figur 3 eine weitere perspektivische Ansicht des Ambosses und des Ambossunterbaus,
Figur 4 eine Seitenansicht der Ultraschallsiegelvorrichtung im Zusammenbau,
Figur 5 eine perspektivische Ansicht der Ultraschallsiegelvorrichtung im Zusammenbau,
Figur 6 eine perspektivische Ansicht einer zweiten Ausführungsform eines Ambosses und des Ambossunterbaus,
Figur 7 eine Seitenansicht einer dritten Ausführungsform und
Figur 8 eine Ansicht von oben auf die dritte Ausführungsform gemäß Figur 7.

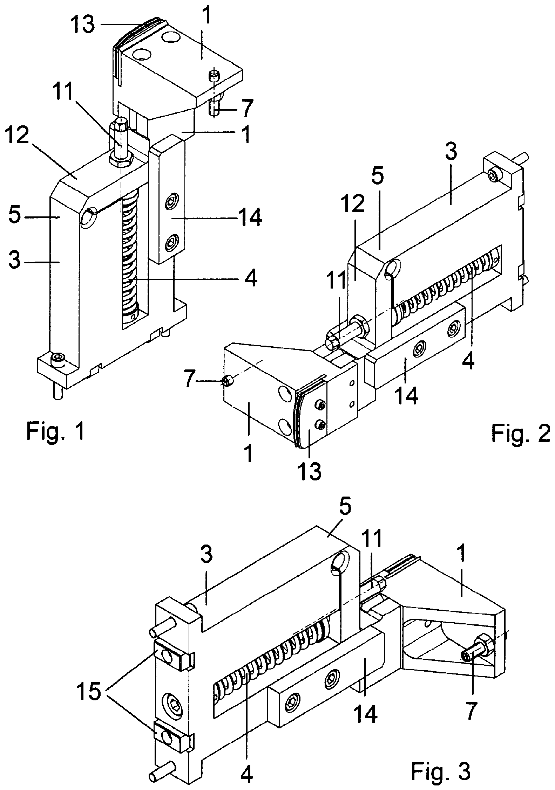

In Figur 1 ist der Amboss 1 und der Ambossunterbau 3 mit ihren Anbauteilen gezeigt. Der Ambossunterbau 3 geht über das Federgelenk 5 einstückig in den balkenförmigen Arbeitsabschnitt 12 über, an dem die Ambosssiegelfläche angeordnet ist. Die Ambosssiegelfläche besteht hier aus einer Ambossklinge 13. An dem balkenförmigen Teil 12 ist außerdem eine Stellschraube 11 zur Einstellung der Federvorspannung des Federelementes 4 vorgesehen. In dem Amboss 1 ist außerdem ein einstellbarer Teil des Anschlags 7 vorgesehen, der mit einem zweiten Teil des Anschlags 8 zusammenwirkt, der in Figur 1 nicht dargestellt ist. Seitlich neben dem Amboss 1 ist einer der zwei Seitenanschläge 14 zu sehen, der an dem Ambossunterbau 3 befestigt ist. Dieser begrenzt die Bewegungsmöglichkeiten des Amboss in Richtung des Seitenanschlags 14, so dass das Federgelenk 5 durch Stellkräfte an der Einstellschraube 11 oder durch Seitenkräfte, die durch Fehler beim Schweißprozess entstehen können, auftreten. Der Unterbau 3 weist eine Aussparung auf, in der ein Federelement 4 eingesetzt ist. Dieses stellt eine Vorspannung zwischen dem balkenförmigen Arbeitsabschnitt 12 des Ambosses 1 und dem Ambossunterbau 3 her. Das Federelement 4 bildet die Gegendruckeinrichtung 4, 5, die durch ihre Federwirkung den Kräften von der Sonotrode 2 entgegen wirkt.

Figur 2 zeigt im Wesentlichen dieselben Elemente des Ambosses wie Figur 1. Durch die andere Perspektive ist jedoch der andere Seitenanschlag 14 zu sehen.

In Figur 3 ist ebenfalls der Ambossunterbau 3 und der Amboss 1 mit Anbauteilen zu sehen. In dieser Perspektive sind außerdem die Kontermutter des Anschlagsteils 7 und zwei Passfedern 15, die parallel zueinander an der Endfläche des Ambossunterbaus 3 angeordnet sind, zu sehen. Sie dienen einer ausgerichteten Montage der Ultraschallsiegelvorrichtung in einer übergeordneten Einheit, beispielsweise einer Schlauchbeutelverpackungsmaschine bzw. einer linear angeordneten Verstelleinheit.

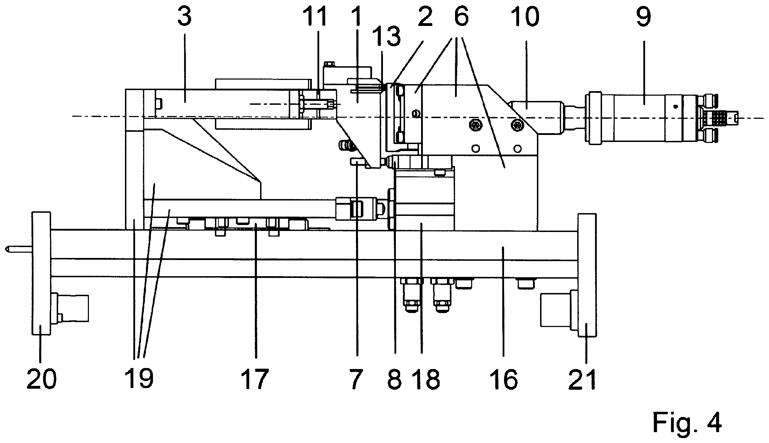

In Figur 4 ist die Ultraschallsiegelvorrichtung in einer Seitenansicht dargestellt. Der Ambossunterbau 3 ist hier in seiner Einbauposition zu sehen, in der er nur als flaches Rechteck erscheint. Daran schließt sich der Amboss 1 mit der Ambossklinge 13 an. Der Ambossklinge 13 gegenüber ist die Sonotrode 2 angeordnet, wobei in dem sehr kleinen, in der Abbildung nicht sichtbaren Zwischenraum die Verschweißung von Materialbahnen stattfindet. Die Sonotrode 2 ist in einem Sonotrodenhalter 6 befestigt, der wiederum an einer Basisplatte 16 befestigt ist. An dem Sonotrodenhalter 6 ist der zweite Teil des Anschlags 8 befestigt, der mit dem einstellbaren Teil des Anschlags 7, der in dem Amboss 1 befestigt ist, in Kontakt steht. Die an dem einstellbaren Teil 7 eingestellte Position beeinflusst unmittelbar den Abstand zwischen der Ambossklinge 13 und der Sonotrode 2. Die Sonotrode 2 ist mit einem Booster 10 verbunden, wobei die Verbindungsstelle von dem Sonotrodenhalter 6 in der Figur verdeckt ist. Der Booster 10 ist wiederum mit dem Konverter 9 verbunden. An der Basisplatte 16 ist eine Linearführung 17 befestigt, mit der der Amboss 1, der Ambossunterbau 3 und ein Ambossschlitten 19 verfahren werden können. Der Ambossschlitten 19 ist mit einem Pneumatikzylinder 18 verbunden, der es ermöglicht, die Ambossklinge 13 von der Sonotrode 2 zu entfernen. Der Schweißspalt wird dadurch weit geöffnet. Bei dem Pneumatikzylinder 18 handelt es sich vorzugsweise um einen doppelt wirkenden Pneumatikzylinder. An den Enden der Grundplatte 16 sind Abschlussplatten 20 und 21 angebracht, die zur Befestigung der Ultraschallsiegelvorrichtung z. B. in einer Maschine dienen.

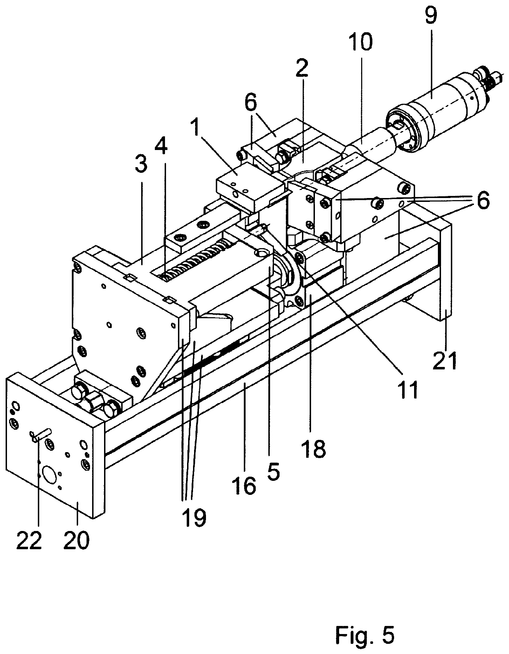

In Figur 5 ist eine perspektivische Ansicht der Ultraschallsiegelvorrichtung dargestellt. Es sind im Wesentlichen dieselben Elemente wie in der Figur 4 zu sehen. Die Sonotrodenhalterung 6 ist jedoch detaillierter erkennbar. In der Endplatte 20 ist ein Zentrierstift 22 zu sehen, der die genaue Positionierung der Ultraschallsiegelvorrichtung beim Einbauen in eine Maschine erleichtert.

Des weiteren kann ein weiterer Anschlag zur groben Positionierung des Ambosses vorgesehen sein. Dieser weitere Anschlag kann in der Lineareinheit verwirklicht sein.

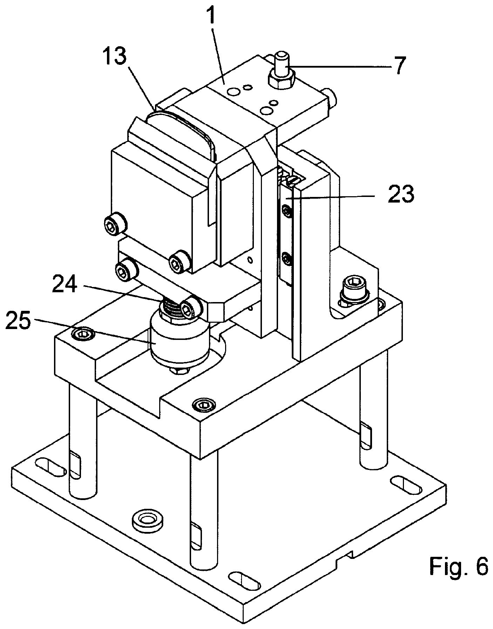

In Figur 6 ist eine alternative Ausführungsform dargestellt. Im Gegensatz zu der vorherigen Ausführungsform wird hier der Amboss nicht mittels eines Festkörpergelenks, sondern über eine Lineareinheit 23 gehalten. Das Federelement 24 stellt die passive Beweglichkeit des Ambosses 13 sicher. Zur Messung der Kraft ist eine Kraftmessdose 25 vorgesehen, auf die in manchen Fällen verzichtet werden kann.

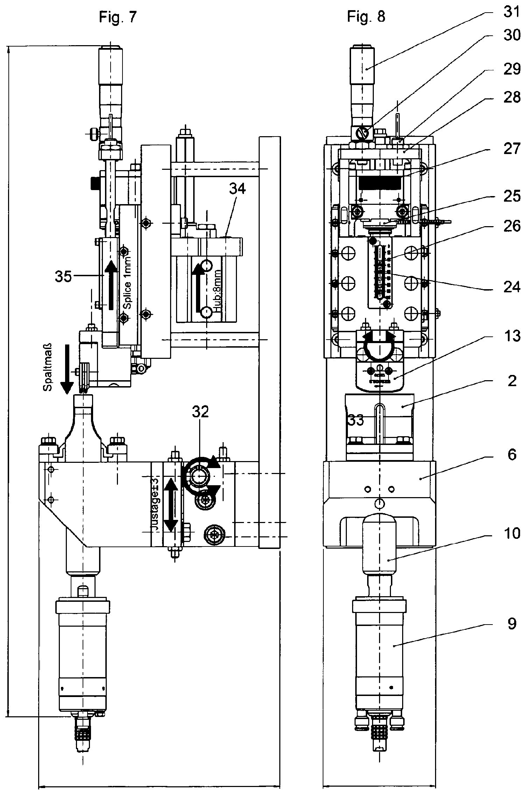

In den Figuren 7 und 8 ist eine dritte Ausführungsform in einer Seitenansicht und in einer Ansicht von oben dargestellt.

Die Sonotrode 2 wird über den Sonotrodenhalter 6 gehalten und ist über den Amplitudentransformator 10 mit dem Konverter 9 verbunden. Der gesamte Sonotrodenhalter 6 lässt sich zur Justage einerseits linear in Richtung des Gegenwerkzeuges 13 bewegen und andererseits um die Schwenkachse 32, die in Figur 7 dargestellt ist, verschwenken. Das Gegenwerkzeug 13, welches um die Schwenkachse 33 verschwenkt werden kann, wie in Figur 8 angedeutet ist, wird mit Hilfe der Feder 24 in eine vorbestimmte Position vorgespannt. Die Federvorspannung erfolgt mit Hilfe der Spindelmutter 26, welche durch Drehung am Handrad 27 linear bewegt werden kann. Mit Hilfe der Kraftmessdose 25 kann die auf die Materialbahn aufgebrachte Kraft gemessen werden.

Das Gegenwerkzeug 13 kann mit Hilfe eines Linearantriebes auf die Sonotrode 2 zu oder von dieser weg bewegt werden. Der Linearantrieb besteht in der gezeigten Ausführungsform aus einem Grobantrieb 34 und einem Feinantrieb 35. Der Feinantrieb 35 kann mit Hilfe der Mikrometerschraube 31 eingestellt und mit Hilfe der Klemmschraube 30 fixiert werden. Den Abstandssensor 29 dient zur Erfassung der Position des Gegenwerkzeuges 13.

### Bezugszeichenliste

- 1: Amboss
- 2: Sonotrode
- 3: Ambossunterbau
- 4: Federelement
- 5: Federgelenk
- 4, 5: Gegendruckeinrichtung
- 6: Sonotrodenhalter
- 7: Anschlag
- 8: Anschlag
- 9: Konverter
- 10: Booster, Amplitudentransformator
- 11: Stellschraube
- 12: balkenförmiger Arbeitsabschnitt
- 13: Ambossklinge
- 14: Seitenanschlag
- 15: Passfedern
- 16: Basisplatte
- 17: Linearführung
- 18: Pneumatikzylinder
- 19: Ambossschlitten
- 20, 21: Abschlussplatten
- 22: Zentrierstift
- 23: Lineareinheit
- 24: Federelement
- 25: Kraftmessdose
- 26: Spindelmutter
- 27: Handrad
- 29: Abstandssensor
- 30: Klemmschraube
- 31: Mikrometerschraube
- 32, 33: Schwenkachse
- 34: Grobantrieb
- 35: Feinantrieb

## Patentansprüche

1. Verfahren zur Ultraschallversiegelung, bei welchem eine Ultraschallsiegelvorrichtung zum Versiegeln von Materialbahnen, wie z.B. Folien, mit einem Amboss (1) mit einer Ambosssiegelfläche und einer Sonotrode (2) mit einer Sonotrodensiegelfläche, wobei der Amboss (1) relativ zur Sonotrode (2) beweglich ist, wobei ein Gegenkrafterzeuger (4) vorgesehen ist, welcher eine Gegenkraft auf den Amboss (1) in Richtung der Sonotrode (2) ausübt, wenn der Amboss (1) aus einer Referenzposition von der Sonotrode (2) wegbewegt wird, wobei der Amboss (1) auf einer beweglichen Lineareinheit (23) angeordnet ist und ein Anschlagelement (7) vorgesehen ist, welches derart angeordnet ist, dass es die Bewegung des Amboss (1) in Richtung der Sonotrode (2) begrenzt, so dass die Ambosssiegelfläche einen durch das Anschlagelement (7) festgelegten Mindestabstand zur Sonotrodensiegelfläche einhält, wobei der Gegenkrafterzeuger (4, 5) derart eingestellt ist, dass der Amboss (1) eine Kraft auf das Anschlagelement (7, 8) ausübt, wenn der Amboss (1) den Mindestabstand zu der Sonotrode (2) hat, verwendet wird, **dadurch gekennzeichnet, dass** das Anschlagselement (7) derart eingestellt wird, dass der Mindestabstand zwischen Ambosssiegelfläche und Sonotrodensiegelfläche zwischen 0,25 und 0,75 der Dicke der zu siegelnden Folien ist.

2. Verfahren nach Anspruch 1, **dadurch gekennzeichnet, dass** der Gegenkrafterzeuger derart eingestellt wird, dass der Amboss (1) eine voreingestellte Siegelkraft auf das Anschlagelement (7) aufbringt.

3. Verfahren nach einem der Ansprüche 1 bis 2, **dadurch gekennzeichnet, dass** während einer ersten Siegelperiode eine größere Ultraschallleistung für das Siegeln verwendet wird als in einer zweiten Siegelperiode, die nach der ersten Siegelperiode liegt.

4. Verfahren nach einem der Ansprüche 1 bis 3, **dadurch gekennzeichnet, dass** die Temperatur der Sonotrodensiegelfläche erfasst wird und vorzugsweise die Ultraschallleistung in Abhängigkeit von der Temperatur der Sonotrodensiegelfläche gewählt wird.

5. Verfahren nach Anspruch 4, **dadurch gekennzeichnet, dass** die Temperatur der Sonotrode (2) und/oder des Ambosses (1) auf eine Arbeitstemperatur geregelt wird.

6. Verfahren nach einem der Ansprüche 1 bis 5, **dadurch gekennzeichnet, dass** die Gegenkraft des Ambosses (1) erfasst und auf einen vorbestimmten Wert geregelt wird.

## Claims

1. An ultrasound sealing process in which an ultrasound welding device for welding material webs such as for example films having an anvil (1) with an anvil welding surface and a sonotrode (2) having a sonotrode welding surface, wherein the anvil (1) is movable relative to the sonotrode (2) and there is provided a counterforce generator (4) which exerts a counterforce on the anvil (1) in the direction of the sonotrode (2) if the anvil (1) is moved out of a reference position away from the sonotrode (2), wherein the anvil (1) is arranged on a movable linear unit (23) and there is provided an abutment element (7) which is so arranged that it limits the movement of the anvil (1) in the direction of the sonotrode (2) so that the anvil welding surface maintains a minimum spacing relative to the sonotrode welding surface, that is fixed by the abutment element (7), wherein the counterforce generator (4, 5) is so adjusted that the anvil (1) exerts a force on the abutment element (7, 8) when the anvil (1) is at the minimum spacing relative to the sonotrode (2), **characterized in that** the abutment element (7) is so adjusted that the minimum spacing between the anvil welding surface and the sonotrode welding surface is between 0.25 and 0.75 of the thickness of the films to be welded.

2. A method as set forth in claim 1 **characterised in that** the counterforce generator is so adjusted that the anvil (1) applies a preset welding force to the abutment element (7).

3. A method as set forth in one of claims 1 through 2 **characterised in that** a greater ultrasound power is used for the welding operation during a first welding period than in a second welding period which is after the first welding period.

4. A method as set forth in one of claims 1 through 3 **characterised in that** the temperature of the sonotrode welding surface is detected and preferably the ultrasound power is selected in dependence on the temperature of the sonotrode welding surface.

5. A method as set forth in claim 4 **characterised in that** the temperature of the sonotrode (2) and/or the anvil (1) is regulated to a working temperature.

6. A method as set forth in one of claims 1 through 5 **characterised in that** the counterforce of the anvil (1) is detected and regulated to a predetermined value.

## Revendications

1. Procédé de scellage par ultrasons, lors duquel un dispositif de scellage par ultrasons permettant de sceller des bandes de matériau, telles que des films, et comprenant une enclume (1) munie d'une surface de scellage d'enclume et une sonotrode (2) munie d'une surface de scellage de sonotrode est utilisé, l'enclume (1) étant mobile par rapport à la sonotrode (2), un générateur de contre-force (4) étant prévu qui exerce une contre-force sur l'enclume (1) en direction de la sonotrode (2) lorsque l'enclume (1) est éloignée de la sonotrode (2) à partir d'une position de référence, l'enclume (1) étant agencée sur une unité linéaire (23) mobile et un élément formant butée (7) étant prévu qui est agencé de telle manière qu'il limite le mouvement de l'enclume (1) en direction de la sonotrode (2) de sorte que la surface de scellage d'enclume respecte, par rapport à la surface de scellage de sonotrode, une distance minimale définie par l'élément formant butée (7), le générateur de contre-force (4, 5) étant réglé de telle manière que l'enclume (1) exerce une force sur l'élément formant butée (7, 8) lorsque l'enclume (1) est à la distance minimale par rapport à la sonotrode (2), **caractérisé en ce que** l'élément formant butée (7) est réglé de telle manière que la distance minimale entre la surface de scellage d'enclume et la surface de scellage de sonde soit comprise entre 0,25 et 0,75 de l'épaisseur des films à sceller.

2. Procédé selon la revendication 1, **caractérisé en ce que** le générateur de contre-force est réglé de telle manière que l'enclume (1) applique une force de scellage préréglée sur l'élément formant butée (7).

3. Procédé selon l'une quelconque des revendications 1 à 2, **caractérisé en ce qu'**une puissance ultrasonique utilisée pour le scellage pendant une première période de scellage est supérieure à celle utilisée pendant une deuxième période de scellage située après la première période de scellage.

4. Procédé selon l'une quelconque des revendications 1 à 3, **caractérisé en ce que** la température de la surface de scellage de sonotrode est détectée et la puissance ultrasonique est de manière préférée sélectionnée en fonction de la température de la surface de scellage de sonotrode.

5. Procédé selon la revendication 4, **caractérisé en ce que** la température de la sonotrode (2) et/ou de l'enclume (1) est régulée à une température de travail.

6. Procédé selon l'une quelconque des revendications 1 à 5, **caractérisé en ce que** la contre-force de l'enclume (1) est détectée et régulée à une valeur prédéterminée.
